# EUROPÄISCHE PATENTSCHRIFT

(11) **EP 0 428 959 B1**
(45) Veröffentlichungstag und Bekanntmachung des Hinweises auf die Patenterteilung: **04.08.1993**
(21) Anmeldenummer: 90121547.5
(22) Anmeldetag: 10.11.1990
(51) Int. Cl.: A01B 73/00, A01C 7/04

(54) **Mehrreihige Einzelkornsämaschine**
Multiple-row precision seed drill
Semoir monograine à plusieurs rangs

(30) Priorität: 24.11.1989 DE 3938998
(43) Veröffentlichungstag der Anmeldung: 29.05.1991
(73) Patentinhaber: Amazonen-Werke H. Dreyer GmbH & Co. KG, D-49205 Hasbergen (DE)
(72) Erfinder: Scheufler, Bernd, Dr.-Ing., W-4507 Hasbergen (DE)

(56) Entgegenhaltungen:
- EP-A- 0 281 761
- DE-U- 8 517 110
- DE-U- 8 613 226
- US-A- 3 799 272

## Beschreibung

Die Erfindung betrifft eine mehrreihige Einzelkornsämaschine gemäß Oberbegriff des Patentanspruches 1.

Derartige Einzelkornsämaschinen sind in der landwirtschaftlichen Praxis bekannt. So sind beispielsweise Einzelkornsämaschinen mit acht nebeneinander angeordneten Säaggregaten bekannt. Diese Einzelkornsämaschinen weisen bedingt durch die großen Reihenweiten, für beispielsweise Mais, eine große Arbeitsbreite auf. Diese Arbeitsbreite erstreckt sich quer zur Fahrtrichtung weit über das zum Transport auf öffentlichen Straßen und Wegen vorgeschriebene Breitenmaß von 3 m. Aus diesem Grunde sind auf jeder Seite der Einzelkornsämaschine zumindest zwei gegenüber dem Grundrahmen quer zur Fahrtrichtung einschiebbare Auslegerarme vorgesehen, an dem sich jeweils zwei Säaggregate befinden. Mittels dieser einschiebbaren Auslegerarme lassen sich die jeweils an diesen Auslegerarmen angeordneten Säaggregate in eine Transportstellung überführen, in welcher sie sich neben den mittleren Einzelkornsäaggregaten befinden.

Durch das Einschieben der Auslegerarme gegenüber dem Grundrahmen quer zur Fahrtrichtung wird jedoch das vorgeschriebene Breitenmaß von 3 m, zum Transport von landwirtschaftlichen Maschinen auf öffentlichen Straßen und Wegen, überschritten. Desweiteren sind die einschiebbaren Auslegerarme starr gegenüber dem Grundrahmen angeordnet, so daß sich diese, eine große Arbeitsbreite aufweisende Einzelkornsämaschine sehr schlecht Bodenunebenheiten anpassen kann. Das Saatgut der einzelnen Säaggregate wird dann mit unterschiedlichen Ablagetiefen im Boden abgelegt. Hierdurch läuft das Saatgut dann ungleichmäßig auf.

Der Erfindung liegt nun die Aufgabe zugrunde, auf einfache Weise eine sicher arbeitende und leicht zu transportierende mehrreihige Einzelkornsämaschine großer Arbeitsbreite zu schaffen.

Diese Aufgabe wird in erfindungsgemäßer Weise dadurch gelöst, daß jeweils auf jeder seite der Maschinenmitte zumindest die äußersten der einschiebbaren Auslegerarme um eine in Fahrtrichtung verlaufende Achse schwenkbar gegenüber dem Grundrahmen angeordnet sind und daß an jedem dieser Auslegerarme jeweils zumindest ein Laufrad zur Abstützung auf den Boden angeordnet ist.

Infolge dieser Maßnahmen läßt sich eine sicher arbeitende Einzelkornsämaschine herstellen, die sich den jeweils vorherrschenden Bodenunebenheiten sehr gut anpassen kann und das Saatgut mit gleicher Ablagetiefe abgelegt wird. Desweiteren läßt sich die große Arbeitsbreite derart durch die einschiebbaren Auslegerarme reduzieren und in die Transportstellung überführen, so daß sie das vorgeschriebene Breitenmaß von 3 m für den Transport landwirtschaftlicher Maschinen auf öffentlichen Straßen und Wegen nicht überschreitet.

Das Überführen der Einzelkornsämaschine von der Arbeits- in die Transportstellung, durch das Einfahren der einzelnen Einzelkornsäaggregate, erfolgt erfindungsgemäß in der Weise, daß auf jeder Seite der Maschinenmitte zumindest drei Säaggregate nach innen (zur Maschinenmitte) verschiebbar angeordnet sind. Hierdruch läßt sich in besonders vorteilhafter Weise eine Transportbreite erreichen, die das zulässige Breitenmaß von 3 m zum Transport landwirtschaftlicher Maschinen auf öffentlichen Straßen und Wegen nicht überschritten wird.

In einem anderen Ausführungsbeispiel läßt sich die Transportbreite von 3 m erfindungsgemäß dadurch herbeiführen, daß sämtliche auf jeder Seite der Maschinenmitte angeordneten Säaggregaten nach innen in die Richtung der Maschinenmitte verschiebbar sind. Hierbei sind dann auch die dem Grundrahmen zugeordneten Laufräder mit den inneren Säaggregate nach innen verschiebbar.

Zum Anpassen an das in der Arbeitsbreite der Einzelkornsämaschine vorkommende unterschiedliche Bodenniveau ist erfindungsgemäß vorgesehen, daß jeweils die beiden äußeren Säaggregate mit den Auslegerarm oder -armen um eine in Fahrtrichtung verlaufende Achse schwenkbar sind. Zum besseren Anpassen an unterschiedliche Bodenunebenheiten ist erfindungsgemäß vorgesehen, daß am äußeren, schwenkbar angeordneten Säaggregat ein sich auf dem Boden abstützendes Laufrad angeordnet ist.

Befinden sich nun jeweils zwei Einzelkornsäaggregate an dem äußeren, einschiebbaren Auslegerarm, ist zur exakten Führung der Einzelkornsäaggregate gegenüber der Bodenoberfläche, d.h. zur exakten Saatgutablage und dem gleichzeitigen Anpassen an evtl. vorherrschende, unterschiedliche Bodenunebenheiten vorgesehen, daß den beiden äußeren, schwenkbar angeordneten Säaggregaten ein sich auf dem Boden abstützendes Laufrad zugeordnet ist.

Das Überführen der eine große Arbeitsbreite aufweisenden Einzelkornsämaschine von der Arbeits- in die Transportstellung, unter Einhaltung des vorgeschriebenen Breitenmaßes von 3 m, läßt sich dadurch erreichen, daß sämtliche Säaggregate quer zur Fahrtrichtung verschiebbar angeordnet sind. Die gleichen Vorteile lassen sich dadurch erreichen, daß sämtliche Säaggregate gegenüber dem Grundrahmen verschiebbar angeordnet sind und die Säaggregate und die Laufräder in Richtung der Maschinenmitte verschiebbar sind.

Weitere Einzelheiten der Erfindung sind der Beispielsbeschreibung und den Zeichnungen zu entnehmen, Hierbei zeigt
- Fig. 1: eine Prinzipdarstellung einer in erfindungsgemäßer Weise ausgerüsteten Einzelkornsämaschine in Arbeitsstellung in der Draufsicht,
- Fig. 2: die Einzelkornsämaschine gemäß Fig. 1 in Transportstellung,
- Fig. 3: eine Prinzipdarstellung einer weiteren, in erfindungsgemäßer Weise ausgerüsteten Einzelkornsämaschine in Arbeitsstellung und in Draufsicht und
- Fig. 4: die Einzelkornsämaschine gemäß Fig. 3 in Transportstellung.

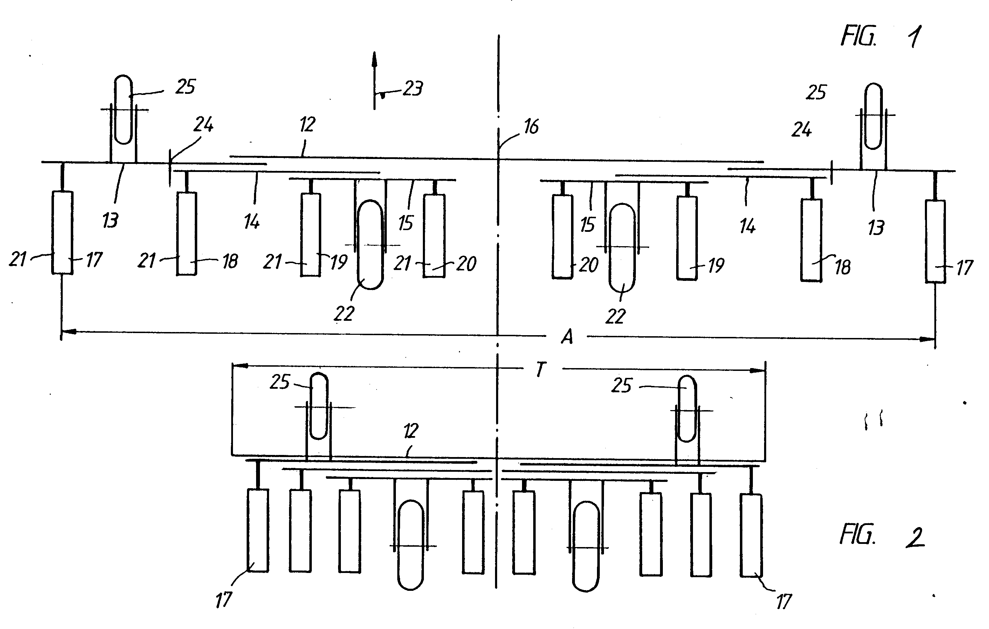

Die Fig. 1 zeigt eine Einzelkornsämaschine mit dem Grundrahmen 12, der die bekannten und daher nicht näher dargestellten Dreipunktkupplungselemente aufweist, mit denen die Einzelkornsämaschine an einen Kraftheber des die Einzelkornsämaschine transportierenden Schleppers angeschlossen wird. An diesem Grundrahmen 12 sind wiederum die Auslegerarme 13, 14 und 15 teleskopartig verschiebbar gegenüber dem Grundrahmen 12 jeweils rechts und links der Maschinenmitte 16 angeordnet. An den Auslegerarmen 13, 14 und 15 sind die Einzelkornsäaggregate 17, 18, 19 und 20 in aufrechter Ebene bewegbar angelenkt. Diese Einzelkornsäaggregate 17, 18, 19 und 20 sind mit den Saatgutbehältern 21 ausgerüstet. Das sich in diesen Saatgutbehältern befindliche Saatgut wird über nicht näher dargestellte Vereinzelungsorgane den das Saatgut im Boden ablegenden Säscharen zugeführt. Die Einzelkornsämaschine stützt sich über die Laufräder 22 auf der Bodenoberfläche ab. Diese, dem Grundrahmen 12 zugeordneten Laufräder 22 sind an dem Auslegerarm 15 angelenkt und somit mit den inneren Säaggregaten 19 und 20 nach innen in die Richtung der Maschinenmitte 16 verschiebbar.

Der äußere Auslegerarm 13, an dem das Einzelkornsäaggregat 17 angelenkt ist, ist mit einer in Fahrtrichtung 23 verlaufenden Achse 24 ausgerüstet. Um diese jeweilige Achse 24 sind die beiden äußeren Säaggregate 17 mit dem Auslegerarm 13 um die in Fahrtrichtung 23 verlaufende Achse 24 schwenkbar. An dem Auslegerarm 13 des am äußeren, schwenkbar angeordneten Säaggregates 17 ist das sich auf dem Boden abstützende Laufrad 25 befestigt.

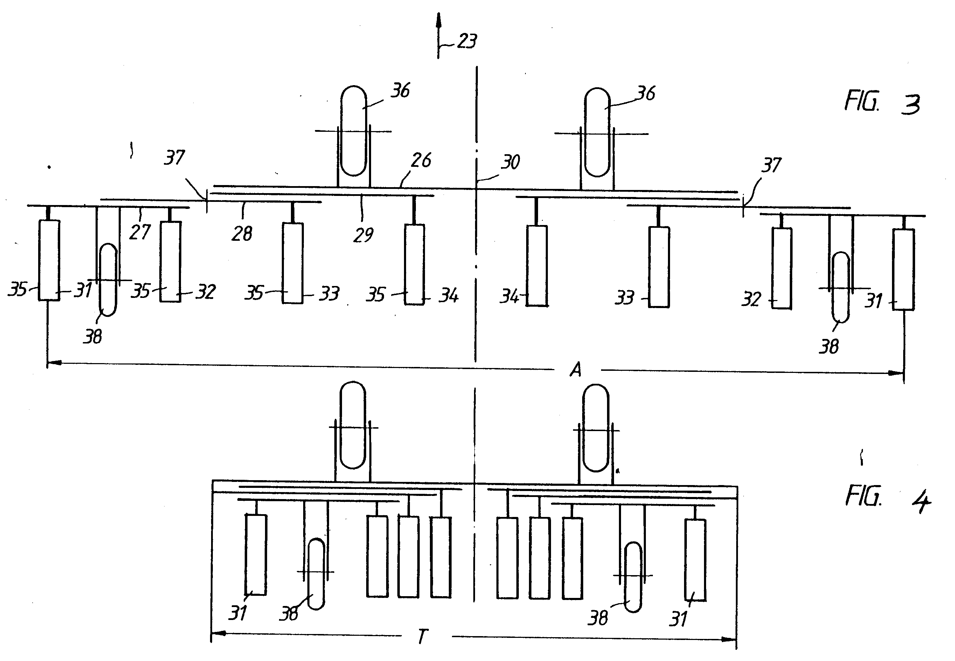

Die an den Auslegerarmen 13, 14 und 15 angeordneten Säaggregaten 17, 18, 19 und 20 sind unabhängig voneinander quer zur Fahrtrichtung einschiebbar. Werden diese Auslegerarme 13, 14 und 15 in Bezug auf den Grundrahmen 12 ganz nach innen in Richtung der Maschinenmitte 16 verschoben, entsteht die Transportstellung gemäß Fig. 2. Die Säaggregate 17, 18, 19 und 20 werden hierbei derart gegenüber dem Grundrahmen 12 nach innen in Richtung der Maschinenmitte 16 verschoben, so daß die Transportbreite T der Einzelkornsämaschine das zulässige Breitenmaß von 3 m für den Transport von landwirtschaftlichen Maschinen auf öffentlichen Straßen und Wegen nicht überschreitet.

Die Fig. 3 zeigt eine Einzelkornsämaschine mit dem Tragrahmen 26. An diesem Grundrahmen 26 sind die nicht näher dargestellten Dreipunktkupplungselemente angeordnet, mit denen die Einzelkornsämaschine an einen Dreipunktkaftheber des die Einzelkornsämaschine transportierenden Schleppers angeschlossen wird. An diesem Grundrahmen 26 sind wiederum die Auslegerarme 27, 28 und 29 teleskopartig nach innen in Richtung Maschinenmitte 30 in Bezug auf den Grundrahmen 26 verschiebbar. An diesen Auslegerarmen 27, 28 und 29 sind die Einzelkorsäaggregate 31, 32, 33 und 34 in aufrechter Ebene bewegbar angeordnet. Diese Säaggregate 31, 32, 33 und 34 sind jeweils mit dem Saatgutbehälter 35 ausgerüstet. Die Einzelkornsämaschine stützt sich über die dem Grundrahmen 26 zugeordneten Laufräder 36 gegenüber der Bodenoberfläche ab.

Die beiden, an dem Auslegerarm 27 angelenkten Einzelkornsäaggregate 31 und 32 sind um die in Fahrtrichtung 23 verlaufende Schwenkachse 37 gegenüber den anderen Säaggregaten 33 und 34 schwenkbar angelenkt. Diese beiden äußeren, schwenkbar angeordneten Säaggregate 31 und 32 stützen sich über das an dem Auslegerarm 27 jeweils angeordnete Laufrad 38 auf der Bodenoberfläche ab. Mittels der Schwenkachse 37, mittels der die äußeren Säaggregate 31 und 33 in aufrechter Ebene bewegbar gegenüber den übrigen Säaggregaten 33 und 34 sowie den an dem Auslegerarm 27 angeordnetem Laufrad 38 befestigt sind, ist es diesen äußeren Säaggregaten 31 und 32 auf einfachste Weise möglich, sich unterschiedlichen Bodenunebenheiten anzupassen.

Werden nun diese Auslegerarme 27, 28 und 29 teleskopartig gegenüber dem Grundrahmen 26 nach innen in Richtung Maschinenmitte 30 verschoben, ergibt sich die Transportbreite T gemäß Fig. 6, die das zulässige Breitenmaß von 3 m zum Transport landwirtschaftlicher Maschinen und Geräte auf öffentlichen Straßen und Wegen nicht überschreitet.

Die Fig. 5 zeigt eine Einzelkornsämaschine mit dem Tragrahmen 26. An diesem Grundrahmen 26 sind die nicht näher dargestellten Dreipunktkupplungselemente angeordnet, mit denen die Einzelkornsämaschine an einen Dreipunktkaftheber des die Einzelkornsämaschine transportierenden Schleppers angeschlossen wird. An diesem Grundrahmen 26 sind wiederum die Auslegerarme 27, 28 und 29 teleskopartig nach innen in Richtung Maschinenmitte 30 in Bezug auf den Grundrahmen 26 verschiebbar. An diesen Auslegerarmen 27, 28 und 29 sind die Einzelkorsäaggregate 31, 32, 33 und 34 in aufrechter Ebene bewegbar angeordnet. Diese Säaggregate 31, 32, 33 und 34 sind jeweils mit dem Saatgutbehälter 35 ausgerüstet. Die Einzelkornsämaschine stützt sich über die dem Grundrahmen 26 zugeordneten Laufräder 36 gegenüber der Bodenoberfläche ab.

Die beiden, an dem Auslegerarm 27 angelenkten Einzelkornsäaggregate 31 und 32 sind um die in Fahrtrichtung 23 verlaufende Schwenkachse 37 gegenüber den anderen Säaggregaten 33 und 34 schwenkbar angelenkt. Diese beiden äußeren, schwenkbar angeordneten Säaggregate 31 und 32 stützen sich über das an dem Auslegerarm 27 jeweils angeordnete Laufrad 38 auf der Bodenoberfläche ab. Mittels der Schwenkachse 37, mittels der die äußeren Säaggregate 31 und 33 in aufrechter Ebene bewegbar gegenüber den übrigen Säaggregaten 33 und 34 sowie den an dem Auslegerarm 27 angeordnetem Laufrad 38 befestigt sind, ist es diesen äußeren Säaggregaten 31 und 32 auf einfachste Weise möglich, sich unterschiedlichen Bodenunebenheiten anzupassen.

Werden nun diese Auslegerarme 27, 28 und 29 teleskopartig gegenüber dem Grundrahmen 26 nach innen in Richtung Maschinenmitte 30 verschoben, ergibt sich die Transportbreite T gemäß Fig. 6, die das zulässige Breitenmaß von 3 m zum Transport landwirtschaftlicher Maschinen und Geräte auf öffentlichen Straßen und Wegen nicht überschreitet.

## Patentansprüche

1. Mehrreihige Einzelkornsämaschine mit mehreren Säaggregaten (17,18,19,20,31,32,33,34), welche quer zur Fahrtrichtung (23) gesehen nebeneinander angeordnet sind und jeweils einen Saatgutbehälter aufweisen, wobei die inneren Einzelkornsäaggregate (19,20,33,34) am oder im Bereich des Grundrahmens (12,26) und die äußeren Einzelkornsäaggregate (17,18,31,32) jeweils an einschiebbaren Auslegern (13,14,15,27,28,29) angeordnet sind, mit welchen sie in eine Betriebsstellung, in welcher sie neben den mittleren Einzelkornsäaggregaten im wesentlichen auf Bodenniveau angeordnet sind und in eine Außerbestriebsstelung gebracht werden können, in welcher sie sich weiter innen befinden, wobei auf jeder Seite der Maschine zumindest zwei gegenüber dem Grundrahmen (12,26) quer zur Fahrtrichtung (23) einschiebbare Auslegerarme (13,27) vorgesehen sind, und wobei am Grundrahmen Laufräder (22,36) zur Abstützung der Maschine auf dem Boden angeordnet sind, dadurch gekennzeichnet, daß jeweils auf jeder Seite der Maschinenmittel (16,30) zumindest die äußersten der einschiebbaren Auslegerarme (13,27) um eine in Fahrtrichtung (23) verlaufende Achse (24,37) schwenkbar gegenüber dem Grundrahmen (12,26) angeordnet sind und daß an jedem dieser Auslegerarme (13,27) jeweils zumindest ein Laufrad (25,38) zur Abstützung auf dem Boden angeordnet ist.

2. Einzelkornsämaschine nach Anspruch 1, dadurch gekennzeichnet, daß auf jeder Seite der Maschinenmitte (16,30) zumindest drei Säaggregate (17,18,19,20,31,32,33,34) nach innen (zur Maschinenmitte) verschiebbar angeordnet sind,

3. Einzelkornsämaschine nach einem oder mehreren der vorstehenden Ansprüche, dadurch gekennzeichnet, daß sämtliche auf jeder Seite der Maschinenmitte (16,30) angeordneten Säaggregate (17,18,20,31,32,33,34) nach innen in die Richtung der Maschinenmitte (16,30) verschiebbar sind.

4. Einzelkornsämaschine nach einen oder mehreren der vorstehenden Ansprüche, dadurch gekennzeichnet, daß auch die dem Grundrahmen zugeordneten Laufräder mit den inneren Säaggregaten nach innen verschiebbar sind.

5. Einzelkornsämaschine nach einen oder mehreren der vorstehenden Ansprüche, dadurch gekennzeichnet, daß jeweils die beiden äußeren Säaggregate (17,31,32) mit den Auslegerarm oder -armen (13,27,28) um eine in Fahrtrichtung (23) verlaufende Achse (24,37) schwenkbar sind.

6. Einzelkornsämaschine nach einen oder mehreren der vorstehenden Ansprüche, dadurch gekennzeichnet, daß am äußeren, schwenkbar angeordneten Säaggregat (17) ein sich auf dem Boden abstützendes Laufrad (25) angeordnet ist.

7. Einzelkornsämaschine nach einen oder mehreren der vorstehenden Ansprüche, dadurch gekennzeichnet, daß den beiden äußeren schwenkbar angeordneten Säaggregaten (31,32) ein sich auf dem Boden abstützendes Laufrad (38) zugeordnet ist.

8. Einzelkornsämaschine nach einen oder mehreren der vorstehenden Ansprüche, dadurch gekennzeichnet, daß sämtliche Säaggregate (17,18,19,20,31,32,33,34) quer zur Fahrtrichtung (23) verschiebbar angeordnet sind.

9. Einzelkornsämaschine nach einem oder mehreren der vorstehenden Ansprüche, dadurch gekennzeichnet, daß die Säaggregate (17,18,19,20,31,32,33,34) und die Laufräder (25,38) in Richutng der Maschinenmitte (16,30) verschiebbar sind.

## Claims

1. Seed drill for sowing single seeds in multiple rows, including a plurality of sowing units (17, 18, 19, 20, 31, 32, 33, 34), which are disposed adjacent one another, when viewed transversely relative to the direction of travel (23), and each have a respective seed container, the inner units (19, 20, 33, 34) for sowing single seeds being disposed on or in the region of the base frame (12, 26) and the outer units (17, 18, 31, 32) for sowing single seeds being each disposed on retractable booms (13, 14, 15, 27, 28, 29), by means of which they can be brought into an operative position, in which they are disposed substantially at ground level adjacent the central units for sowing single seeds, and into an. inoperative position, in which they are situated further internally, at least two boom arms (13, 27) being provided on each side of the drill and being retractable relative to the base frame (12, 26) transversely relative to the direction of travel (23), and running wheels (22, 36) being disposed on the base frame in order to support the drill on the ground, characterised in that at least the outermost of the retractable boom arms (13, 27) are disposed on each side of the drill centre (16, 30) so as to be pivotable, relative to the base frame (12, 26), about an axis (24, 37) which extends in the direction of travel (23), and in that at least one running wheel (25, 38) is disposed on each of these boom arms (13, 27) for support on the ground.

2. Seed drill for sowing single seeds according to claim 1, characterised in that at least three sowing units (17, 18, 19, 20, 31, 32, 33, 34) are disposed on each side of the drill centre (16, 30) so as to be inwardly displaceable (relative to the drill centre).

3. Seed drill for sowing single seeds according to one or more of the preceding claims, characterised in that all of the sowing units (17, 18, 19, 20, 31, 32, 33, 34), which are disposed on each side of the drill centre (16, 30), are inwardly displaceable towards the drill centre (16, 30).

4. Seed drill for sowing single seeds according to one or more of the preceding claims, characterised in that the running wheels associated with the base frame are also inwardly displaceable with the inner sowing units.

5. Seed drill for sowing single seeds according to one or more of the preceding claims, characterised in that the two outer sowing units (17, 31, 32) are each pivotable with the boom arm or arms (13, 27, 28) about an axis (24, 37), which extends in the direction of travel (23).

6. Seed drill for sowing single seeds according to one or more of the preceding claims, characterised in that a running wheel (25), which is supported on the ground, is disposed on the outer, pivotably disposed sowing unit (17).

7. Seed drill for sowing single seeds according to one or more of the preceding claims, characterised in that a running wheel (38), which is supported on the ground, is associated with the two outer, pivotably disposed sowing units (31, 32).

8. Seed drill for sowing single seeds according to one or more of the preceding claims, characterised in that all of the sowing units (17, 18, 19, 20, 31, 32, 33, 34) are disposed so as to be displaceable transversely relative to the direction of travel (23).

9. Seed drill for sowing single seeds according to one or more of the preceding claims, characterised in that the sowing units (17, 18, 19, 20, 31, 32, 33, 34) and the running wheels (25, 38) are displaceable towards the drill centre (16, 30).

## Revendications

1. Semoir monograine à plusieurs rangs, comportant plusieurs organes semoirs (17, 18, 19, 20, 31, 32, 33, 34) juxtaposés transversalement à la direction de déplacement (23) et ayant chaque fois un réservoir à semence, les organes semoirs monograine intérieurs (19, 20, 33, 34) étant prévus sur ou dans la zone du châssis (12, 26) et des organes semoirs monograine extérieurs (17, 18, 31, 32) étant chaque fois fixés sur des bras extensibles (13, 14, 15, 27, 28, 29) qui les conduisent dans une position d'utilisation pour laquelle ils sont mis au niveau du sol, à côté des organes semoirs monograine médians et dans une position de repos dans laquelle ces organes se trouvent plus à l'intérieur, de chaque côté de la machine au moins deux bras extensibles (13, 23) coulissent transversalement à la direction de déplacement (23) par rapport au châssis (12, 26), et le châssis (26) porte des roues de roulement pour soutenir la machine sur le sol, machine caractérisée en ce que de chaque côté par rapport au milieu (16, 30) de la machine, au moins les bras extensibles extérieurs (13, 27) qui rentrent par coulissement, peuvent basculer autour d'un axe (24, 37) dirigé dans la direction de déplacement (23) par rapport au châssis (12, 26), et en ce que chacun des bras (13, 27) extensible comporte au moins une roue (25, 38) pour s'appuyer sur le sol.

2. Semoir monograine selon la revendication 1, caractérisé en ce que de chaque côté, par rapport au milieu (16, 30) de la machine, on a au moins trois organes semoirs (17, 18, 19, 20, 31, 32, 33, 34) qui peuvent coulisser vers l'intérieur (par rapport au milieu de la machine).

3. Semoir monograine selon une ou plusieurs des revendications précédentes, caractérisé en ce que tous les organes semoirs (17, 18, 20, 31, 32, 33, 34) prévus de chaque côté du milieu de la machine (16, 30) peuvent coulisser vers l'intérieur en direction du milieu (16, 30) de la machine.

4. Semoir monograine selon une ou plusieurs des revendications précédentes, caractérisé en ce que les roues de roulement associées au châssis peuvent coulisser vers l'intérieur avec les organes semoirs intérieurs

5. Semoir monograine selon une ou plusieurs des revendications précédentes, caractérisé en ce que chaque fois les deux organes semoirs extérieurs (17, 31, 32) sont montés basculant avec le ou les bras extensibles (13, 27, 28) autour d'un axe (24, 37) dirigé dans la direction de déplacement (23).

6. Semoir monograine selon une ou plusieurs des revendications précédentes, caractérisé par une roue (25) qui s'appuie sur le sol, cette roue étant prévue sur l'organe semoir (17) extérieur, monté basculant.

7. Semoir monograine selon une ou plusieurs des revendications précédentes, caractérisé en ce qu'aux deux organes semoirs (31, 32) montés basculant à l'extérieur, est associée une roue (38) qui s'appuie sur le sol.

8. Semoir monograine selon une ou plusieurs des revendications précédentes, caractérisé en ce que tous les organes semoirs (17, 18, 19, 20, 31, 32, 33, 34) sont montés coulissants transversalement à la direction de déplacement (23).

9. Semoir monograine selon une ou plusieurs des revendications précédentes, caractérisé en ce que les différents organes semoirs (17, 18, 19, 20, 31, 32, 33, 34) et des roues de roulement (25, 38) peuvent coulisser en direction du milieu de la machine (16, 30).
